# EUROPÄISCHE PATENTSCHRIFT

(11) **EP 4 389 534 B1**
(45) Veröffentlichungstag und Bekanntmachung des Hinweises auf die Patenterteilung: **29.01.2025**
(21) Anmeldenummer: 22216186.1
(22) Anmeldetag: 22.12.2022
(51) Int. Cl.: B60R 19/18, B60R 19/34

(54) **STOSSFÄNGERANORDNUNG MIT QUERTRÄGER**
BUMPER ASSEMBLY WITH CROSS BEAM
ENSEMBLE PARE-CHOCS COMPRENANT UNE TRAVERSE

(43) Veröffentlichungstag der Anmeldung: 26.06.2024
(73) Patentinhaber: Benteler Automobiltechnik GmbH, 33102 Paderborn (DE)
(72) Erfinder: Tatarinov, Konstantin, 33602 Bielefeld (DE)
(74) Vertreter: Osterhoff, Utz

(56) Entgegenhaltungen:
- DE-B4- 102013 015 420
- US-A1- 2018 194 310

## Beschreibung

Die vorliegende Erfindung betrifft eine Stoßfängeranordnung, welche über Crashboxen an einem Kraftfahrzeug gekoppelt ist, gemäß den Merkmalen im Oberbegriff von Anspruch 1.

Aus dem Stand der Technik sind Stoßfängerquerträger bekannt, die an Kraftfahrzeugkarosserien gekoppelt sind. Zumeist erfolgt dies unter Eingliederung von Crashboxen. Ein Stoßfängerquerträger ist zumeist aus einem metallischen Werkstoff hergestellt und kann auch Bumper, Stoßfänger oder Querträger genannt werden.

DE102013015420B4 offenbart eine Stoßfängeranordnung gemäß dem Oberbegriff des Anspruchs 1.

Ein solcher Stoßfängerquerträger soll eine hinreichende Steifigkeit aufweisen, dass insbesondere beispielsweise bei einem Pol- oder Pfahltest eine hinreichende Abstützwirkung erreicht wird. Der Stoßfängerquerträger selbst ist also möglichst steif ausgebildet. Das Kraftfahrzeug prallt auf einen Gegenstand auf und die Crashboxen deformieren sich. Dabei wird Crashenergie in Umformarbeit gewandelt.

Der Stoßfängerquerträger selbst steht dabei in einem Interessenskonflikt, zum einen in günstiger Produzierbarkeit sowie der Aufgabe, selbst durch Verformung Energie aufzunehmen.

Gleichzeitig muss der Stoßfänger jedoch eine hohe Steifigkeit aufweisen, um beispielsweise bei einem zentral aufprallenden Gegenstand, und nicht einem flächig aufprallenden Gegenstand, mithin einem Pfahltest, einen derart hohen Widerstand gegen Verformung selbst zu besitzen, dass ausreichend Energie bei der Verformung abgebaut wird, um die weiter dahinterliegenden Crashlastpfade wie Längsträger, Seitenwand, Tunnel und insbesondere Traktionsbatteriekästen zu entlasten bzw. zu schützen.

Aufgabe der vorliegenden Erfindung ist es, ausgehend vom Stand der Technik, einen Stoßfängerquerträger bzw. eine Stoßfängeranordnung bereitzustellen, die insbesondere bei einem Centerpoltest gegenüber dem Stand der Technik gesteigerte Crashperformance zeigt.

Die zuvor genannte Aufgabe wird erfindungsgemäß mit einer Stoßfängeranordnung mit dem Merkmal im Anspruch 1 gelöst.

Vorteilhafte Ausgestaltungsvarianten sind Gegenstand der abhängigen Ansprüche.

Die Stoßfängeranordnung ist über Crashboxen an einem Kraftfahrzeug gekoppelt, insbesondere die Crashboxen sind an einem jeweiligen Längsträger eines Kraftfahrzeuges angeordnet. Die Stoßfängeranordnung kann frontseitig an einem Kraftfahrzeug angeordnet sein. Die Stoßfängeranordnung kann jedoch auch heckseitig an einem Kraftfahrzeug angeordnet sein. Die Stoßfängeranordnung weist einen Querträger auf. Der Querträger selbst ist in seinem Querschnitt als Hohlprofil ausgebildet. Der Querträger weist eine im Querschnitt profilierte Vorderwand und eine im Querschnitt profilierte Hinterwand auf.

Eine profilierte Vorderwand sowie eine profilierte Hinterwand bedeutet, dass die Vorderwand und die Hinterwand im Querschnitt nicht plan ausgebildet sind, sondern umformtechnisch bearbeitet sind. Bevorzugt bedeutet, die Profilierung der Vorderwand sowie die Profilierung der Hinterwand im Querschnitt eine C-förmige bzw. U-förmige insbesondere hutförmige Profilierung. Die Öffnungen der C-Form bzw. U-Form bzw. Hutform sind dann aufeinander zu zeigend angeordnet, sodass sich ein im Querschnitt geschlossenes Hohlprofi ergibt.

Erfindungsgemäß zeichnet sich die Stoßfängeranordnung bzw. der Querträger nunmehr dadurch aus, dass eine Abwicklungslänge der Vorderwand in Kraftfahrzeugvertikalrichtung orientiert weniger als 20 %, insbesondere weniger als 15 % und bevorzugt weniger als 10 %, ganz besonders bevorzugt weniger als 5% kleiner ist, in Relation zu einer Abwicklungslänge der Hinterwand. Mindestens sind jedoch beide Abwicklungslängen, also die Abwicklungslänge der Vorderwand und die Abwicklungslänge der Hinterwand, gleich groß. Besonders bevorzugt ist die Abwicklungslänge der Vorderwand um mindestens mehr als 1 % kleiner als die Abwicklungslänge der Hinterwand, bevorzugt ist sie um mehr als 2 % kleiner als die Abwicklungslänge der Hinterwand. Die Hinterwand kann auch als Rückwand bezeichnet werden. Die Längenverhältnisse bedeuten, dass das Verhältnis von Abwicklungslänge der Vorderwand zu Abwicklungslänge der Hinterwand größer gleich 0,8 und bevorzugt kleiner als 1 ist. Dies bedeutet, die Abwicklungslänge der Vorderwand ist um den Faktor größer gleich 0,8 und kleiner 1 kleiner als die Abwicklungslänge der Rückwand.

Der erfindungswesentliche Vorteil zeichnet sich nunmehr dadurch aus, dass bei einem Pfahltext, insbesondere bei einem Mittenpfahltest, auch Centerpoltest genannt, Vorderwand und Hinterwand des Querträgers zunächst eine hinreichende Steifigkeit bilden bei einem initialen Aufprall auf den Pfahl. Bei weiterer Intrusion des Pfahls in Kraftfahrzeuglängsrichtung zu dem Kraftfahrzeug hin, schmiegt sich dann der Querträger an die Querschnittskontur des Pfahls an. Dabei werden die Vorderwand und die Rückwand in Relation zueinander, aufeinander zu bewegt. Vorderwand und Hinterwand des Querträgers bilden dann jeweils ein Zugband. Bei fortschreitendem Zugband tritt dann der Pfahl weiter in Richtung Kraftfahrzeug ein und Vorderwand und Hinterwand des Querträgers wickeln sich quasi zumindest längenabschnittsweise um den Pfahl. Insbesondere bilden somit Vorderwand und Hinterwand einen Zugbandverbund.

Durch die annähernd gleiche Abwicklungslänge wird erreicht, dass der Querträger sich plättet und kaum noch bei der Verformung auftretende Biegespannungen mehr tragen muss. Dadurch bricht er nicht.

Durch die erfindungsgemäße Lösung wird es somit ermöglicht, dass zunächst der Querträger eine hinreichende Steifigkeit bei einem Aufprall auf den Pfahl besitzt. Diese Steifigkeit kann bevorzugt durch eine in der Vorderwand ausgeprägte Sicke erhöht werden. Die Sicke erstreckt sich in ihrem Längsverlauf, bevorzugt in Kraftfahrzeugquerrichtung und ist zumindest längenabschnittsweise über den Querträger ausgebildet. Bei weiterer Intrusion des Pfahls in Richtung des Kraftfahrzeuges wird dann der Querschnitt auf die Kraftfahrzeugvertikalrichtung, bezogen nach oben und unten, aufgeweitet und, in Tiefe des Querträgers in Kraftfahrzeuglängsrichtung orientiert, flach gedrückt. Es bilden sich somit Vorderwand und Hinterwand als Zugband aus, so dass ein Reißen von Vorderwand oder Hinterwand bei stärkerer Intrusion des Pfahls in Richtung des Kraftfahrzeuges vermieden wird.

In diesem Zusammenhang ist die Abwicklungslänge derart definiert, dass bei einer flachgedrückten Vorderwand bzw. Hinterwand die sich ergebende Länge in Kraftfahrzeugvertikalrichtung gemessen ist. Hierbei ist insbesondere der Querträger aus zwei miteinander gefügten Halbschalen hergestellt, insbesondere aus einem Stahlwerkstoff und besonders bevorzugt als Warmumform- und Presshärtebauteil. Der Querträger kann jedoch auch einstückig und werkstoffeinheitlich hergestellt sein, beispielsweise aus einer Leichtmetalllegierung, beispielsweise als Extrusionsbauteil oder als Rollformbauteil. Die gemessene Abwicklungslänge ist dabei im Sinne der Erfindung die Länge, die sich ergibt, von einer auf die Kraftfahrzeugvertikalrichtung bezogenen oberen Kontaktpunkt sowie auf die Kraftfahrzeugvertikalrichtung bezogenen unteren Kontaktpunkt bzw. jeweiligen oberen Kopplungsstelle und unteren Kopplungsstelle gemessen ist. Es können beispielsweise Flanschanteile nach außen überstehend sein, die jedoch dann nicht zu der gemessenen relevanten Abwicklungslänge zu zählen sind.

Eine besonders bevorzugte Ausgestaltungsvariante sieht vor, dass die Vorderwand und/oder die Hinterwand als in Kraftfahrzeugquerrichtung orientiert zumindest längenabschnittsweise im Querschnitt hutförmiges Profil ausgebildet sind. Insbesondere sind dann die Vorderwand und die Hinterwand über in Kraftfahrzeugvertikalrichtung orientierte Flansche miteinander gekoppelt.

Es hat sich erfindungsgemäß gezeigt, dass der Querschnitt mit in Relation zueinanderstehenden Abwicklungslängen von Vorderwand und Hinterwand nicht über den gesamten Längsverlauf des Querträgers ausgebildet sein muss. Es ist im Sinne der Erfindung auch ausreichend, wenn die erfindungsgemäße Querschnittsgeometrie zwischen Vorderwand und Hinterwand in einem mittleren Längenabschnitt der Querträger ausgebildet ist. Hierzu ist bei einer Mittenquerschnittsebene bei Y = 0 bezogen auf die Kraftfahrzeugquerrichtung in einem Bereich von Y kleiner gleich ± 250 mm, insbesondere Y kleiner gleich ± 210 mm ein mittlerer Längenabschnitt ausgebildet. Bevorzugt ergibt sich in Kraftfahrzeugquerrichtung gemessen somit ein Längenabschnitt von weniger von 420 mm, besonders bevorzugt von ca. 400 mm, der im Querschnitt die erfindungsgemäße Ausgestaltung aufweist, mindestens jedoch ± 80 mm, gemessen wiederum von der Mittelquerschnittsebene bei Y= 0.

In dem äußeren Längenabschnitt kann dann beispielsweise eine normale Querschnittsgeometrie ausgebildet sein, beispielsweise aus einem Hutblech und einem ebenen bzw. planen Schließblech. Beispielsweise könnte auch im äußeren Längenabschnitt ein im Querschnitt nicht geschlossenes Hohlprofil ausgebildet sein. Mithin ist in diesem Bereich dann auch gar kein weitergehendes Schließblech oder eine Halbschale notwendig.

Der erfindungsgemäße Effekt wird weiterhin dadurch verstärkt, dass der Querträger im Querschnitt bevorzugt sechseckförmig ausgebildet ist, alternativ und ergänzend, dass zwei Wandabschnitte der Profilierung in einem jeweiligen Winkel α > 91°, bevorzugt größer 92°, insbesondere größer 95°, jedoch kleiner 180° zueinander angeordnet sind. Wiederum alternativ oder ergänzend ist ein Öffnungswinkel zwischen einem Obergurt und einem Untergurt der Vorderwand und/oder Hinterwand > 91° ausgebildet. Durch vorher beschriebene Maßnahmen wird es ermöglicht, dass bei einem Auftreffen eines Hindernisses in Kraftfahrzeuglängsrichtung, die Verformung des Querschnitts des Querträgers derart durchgeführt wird, dass sich der Querträger auf die Kraftfahrzeugvertikalrichtung nach oben und unten zieht und Vorderwand und Hinterwand aufeinander zu bewegt bzw. flachgedrückt werden. Hierdurch wiederum bilden sich dann besonders bevorzugt Vorderwand als auch Hinterwand als jeweiliger Zuggurt aus.

Weitere Vorteile, Merkmale und Eigenschaften der vorliegenden Erfindung sind Gegenstand der nachfolgenden Beschreibung. Bevorzugte Ausgestaltungsvarianten werden in schematischen Figuren dargestellt. Diese dienen dem einfacheren Verständnis der Erfindung. Es zeigen:
- Figur 1: Stoßfängeranordnung in perspektivischer Ansicht,
- Figur 2: Querschnitt gemäß der Schnittlinie II-II der Figur 1,
- Figur 3: Abwicklungslänge von Vorderwand und Hinterwand,
- Figur 4a - e: verschiedene Querschnittsvarianten des erfindungsgemäßen Querträgers,
- Figur 5: Draufsicht eines erfindungsgemäßen Crashszenarios,
- Figur 6a +b: erfindungsgemäßes Crashszenario bei initialem Aufprall,
- Figur 7: Querschnittsansicht in Kraftfahrzeuglängsrichtung X gemäß der Schnittlinie VII-VII aus Figur 5.

In den Figuren werden für gleiche und ähnliche Bauteile dieselben Bezugzeichen verwendet, auch wenn eine wiederholte Beschreibung aus Vereinfachungsgründen entfällt.

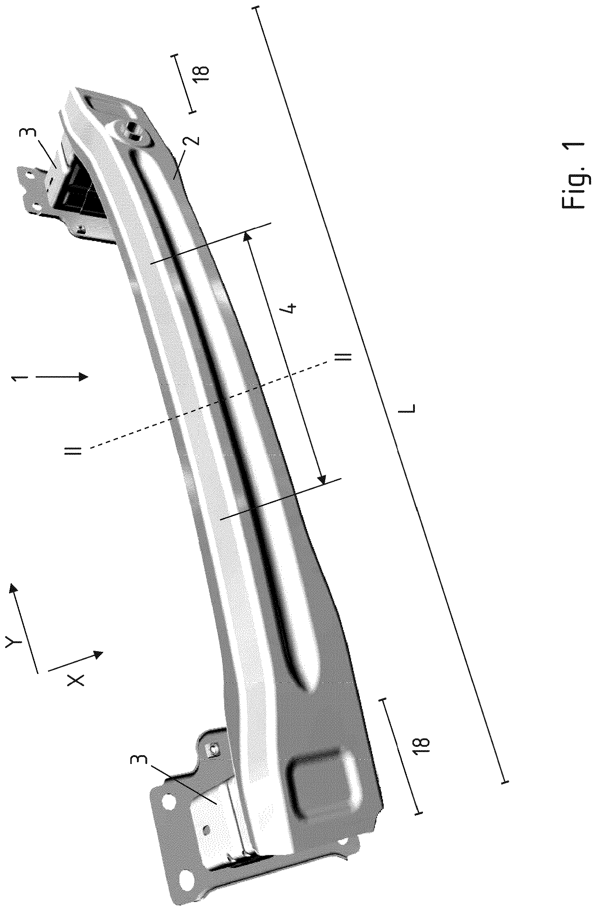

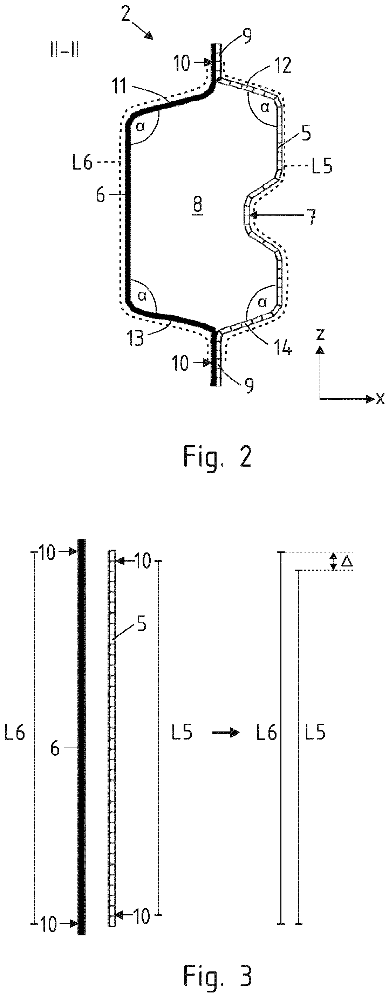

Figur 1 zeigt eine erfindungsgemäße Stoßfängeranordnung 1 in perspektivischer Ansicht. Die Stoßfängeranordnung 1 weist einen Querträger 2 auf, wobei der Querträger 2 selbst in Anbindungsabschnitten 18 an Crashboxen 3 gekoppelt ist und der Querträger 2 selbst ist im Querschnitt als Hohlprofil ausgebildet, worauf nähergehend in Figur 2 und 3 eingegangen wird.

Der Querträger 2 weist eine Gesamtlänge L auf. Die Länge erstreckt sich in Kraftfahrzeugquerrichtung Y. Bevorzugt ist die erfindungswesentliche Querschnittsgeometrie nur über einen mittleren Längenabschnitt 4 und nicht in den Anbindungsbereichen bzw. Anbindungsabschnitten 18 ausgebildet. Die Querschnittsgeometrie kann jedoch auch über die gesamte Länge des Querträgers 2 ausgebildet sein.

Gemäß der Schnittlinie II-II aus Figur 1 ist ein erfindungsgemäßer Querschnitt in der Figur 2 dargestellt. Der Querträger 2 weist eine Vorderwand 5 sowie eine Hinterwand 6 auf. Vorderwand 5 und Hinterwand 6 beziehen sich in diesem Fall auf die Kraftfahrzeuglängsrichtung X als Fahrtrichtung. Der Querträger 2 weist bevorzugt in der Vorderwand 5 eine Sicke 7 auf. Die Sicke 7 ist entgegen der Kraftfahrzeuglängsrichtung X in einen Innenraum 8 des Hohlprofils des Querträgers 2 orientiert angeordnet. Die Sicke 7 erstreckt sich in ihrer Längsrichtung wie in Figur 1 dargestellt, jedoch in diesem Fall nicht in die Anbindungsabschnitte 18, zumindest längenabschnittsweise über die Länge L des Querträgers 2.

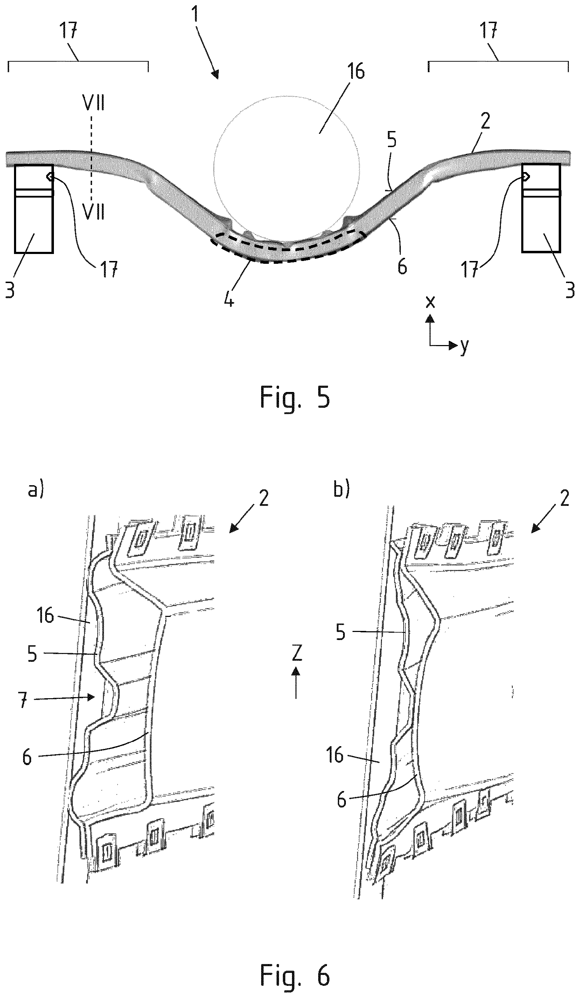

Sowohl Vorderwand 5 als auch Hinterwand 6 weisen jeweils in Kraftfahrzeugvertikalrichtung z orientiert angeordnete Flansche 9 auf. Exemplarisch ist jeweils auf Höhe der Kraftfahrzeugvertikalrichtung eine Kopplungsstelle 10, beispielsweise eine Punktschweißung bei Bezugszeichen 10 dargestellt. Die erfindungsgemäße Abwicklungslänge ist nunmehr die Länge gemessen entlang des profilierten Querschnittes der Vorderwand 5 bzw. Hinterwand 6 und hier konkret von der auf die Bildebene bezogen oberen Kopplungsstelle 10 bis zu der auf die Bildebene unteren Kopplungsstelle 10. Werden Vorderwand 5 und Hinterwand 6 flach gedrückt, so ergibt sich die in Figur 3 dargestellte Ansicht von jeweiliger oberer Kopplungsstelle 10 bis zur unteren Kopplungsstelle 10. Die Abwicklungslänge L6 der Hinterwand 6 ist dabei geringfügig größer die als Abwicklungslänge L5 der Vorderwand. Es ergibt sich ein entsprechend geringes Delta Δ. Hierdurch erfindungsgemäß erreicht, dass weder Vorderwand 5 noch Hinterwand 6 noch die Fügeverbindung als Zugband reißen, wenn sich der Querträger 2 um einen wie beispielsweise in Figur 5 dargestellten Pfahl 16 biegt bzw. anschmiegt. Im Crashfall liegen Vorderwand 5 und Hinterwand 6 mit einem Nullspalt annähernd aneinander an. Dies ist jedoch hier auf die Bildebene nach links und rechts voneinander separiert dargestellt zur besseren Illustrierung. Das Delta, mithin der Unterschied in der Abwicklungslänge orientiert sich bevorzugt an mechanischem Eigenschaftswert der Bruchdehnung des verwendeten Werkstoffes.

Mithin liegt das Delta insbesondere in einem Bereich, in welchem der Werkstoff sich elastisch dehnt, bevor er anfängt zu reißen.

Wie in Figur 2 dargestellt weist sowohl der Profilquerschnitt der Vorderwand 5 als auch der Profilquerschnitt der Hinterwand 6 jeweils eine hutförmige Konfiguration auf. Die jeweiligen Öffnungen der Hutform sind aufeinander zu orientiert und bilden somit den Innenraum 8, des im Querschnitt geschlossenen Hohlprofils. Ferner weisen sowohl Vorderwand 5 als auch Hinterwand 6 einen jeweiligen Obergurt 11, 12 sowie einen jeweiligen Untergurt 13, 14 auf. Ein jeweiliger Winkel α von Obergurt 11 der Hinterwand 6 zum Steg der Hinterwand 6 bzw. Obergurt 12 der Vorderwand 5 zum Steg der Vorderwand 5 bzw. von Untergurt 13 der Hinterwand 6 zum Steg der Hinterwand 6 bzw. Untergurt 14 der Vorderwand 5 zum Steg der Vorderwand 5 Winkel α ist größer 95° ausgebildet. Im Falle eines Crashes in Kraftfahrzeuglängsrichtung X erfolgt hierdurch ein auf die Kraftfahrzeugvertikalrichtung Z bezogen nach oben und unten erfolgendes Strecken bzw. Ziehen von Vorderwand 5 und Hinterwand 6 und dadurch bedingt Abflachen in Kraftfahrzeuglängsrichtung X von Vorderwand 5 und Hinterwand 6 zueinander.

Für alle Ausführungsvarianten sowie die allgemeine Beschreibung gilt weiterhin nachfolgende Offenbarung. Der jeweilige Obergurt 11, 12 von Hinterwand 6 und Vorderwand 5 sowie der jeweilige Untergurt 13, 14 von Vorderwand 5 und Hinterwand 6 erstrecken im mittleren Abschnitt sich in Kraftfahrzeuglängsrichtung X um mindestens 10 mm, bevorzugt mehr als 15 mm, besonderes bevorzugt mehr als 20 mm. Die Obergurte bzw. Untergurte sollten sich um nicht mehr als jeweils 100 mm in Kraftfahrzeuglängsrichtung X erstrecken. Der Obergurt 11 und der Untergurt 13 der Hinterwand 6 sowie der Obergurt 12 und der Untergurt 14 der Vorderwand 5 sind besonders bevorzugt annähernd mit einer gleichen bzw. ähnlichen Erstreckung in Kraftfahrzeuglängsrichtung X ausgebildet. Maximal sollten die Erstreckungen in Kraftfahrzeuglängsrichtung X von Obergurt 11, 12 und Untergurt 13, 14 um weniger als 40 %, insbesondere von Obergurt/Hinterwand zu Obergurt/Vorderwand und von Untergurt/Hinterwand zu Untergurt/Vorderwand um maximal 40%, bevorzugt weniger als 30% und insbesondere weniger als 25% voneinander abweichen.

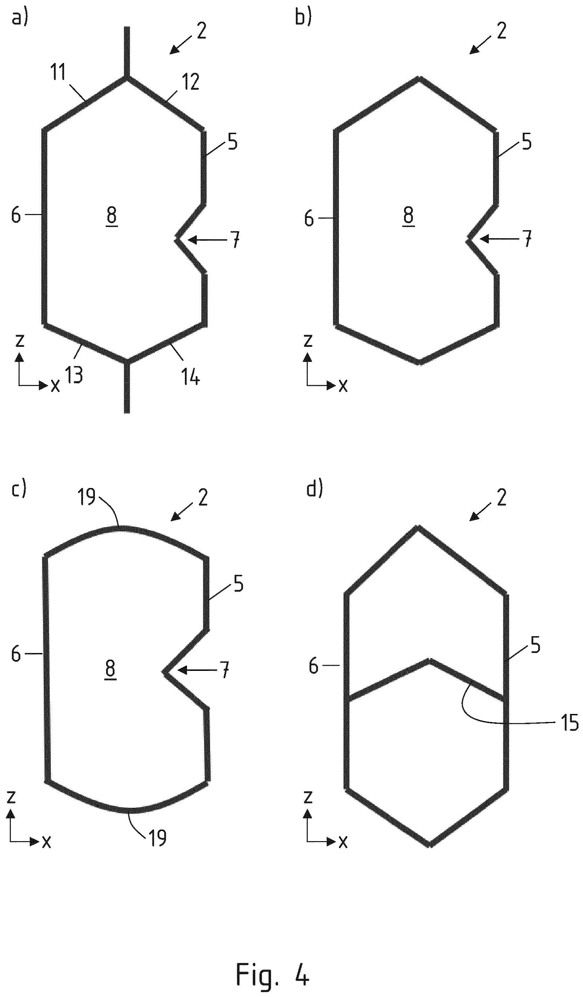

Figur 4a bis 4d zeigen verschiedene Querschnittsvarianten des erfindungsgemäßen Querträgers 2 zumindest im mittleren Längenabschnitt 4. Der Querträgers 2 selbst ist immer hohl ausgebildet und weist einen Innenraum auf. Obergurt 11, 12 und Untergurt 13,14 von Vorderwand 5 und Hinterwand 6 zueinander gesehen, sind immer auf die Kraftfahrzeugvertikalrichtung Z nach außen orientiert angeordnet bzw. haubenförmig oder dachförmig nach außen orientiert zeigend. Hierdurch wird im Crashfall in Kraftfahrzeuglängsrichtung X sichergestellt, dass ein auf die Kraftfahrzeugvertikalrichtung Z nach oben und unten erfolgendes Nachaußenziehen von Vorderwand 5 und Hinterwand 6 zueinander sichergestellt wird. Dies kann im Querschnitt jeweils als sechseckige Geometrie abgebildet werden, im Fall von Figur 4a, b, d. Es kann jedoch auch mit zwei nach außen gerichteten Wölbungen bzw. Rundungen 19 gemäß Figur 4c ausgebildet sein. Auch kann ein Mittensteg 15, wie in Figur 4d dargestellt angeordnet sein. Dieser weist jedoch dann auch eine derartige Querschnittsgeometrie auf, dass er sich bei einer Intrusion in Kraftfahrzeuglängsrichtung X auf die Kraftfahrzeugvertikalrichtung verformt, so dass er zusammen mit Vorderwand und Hinterwand eine möglichst flachen Zugverbund bildet.

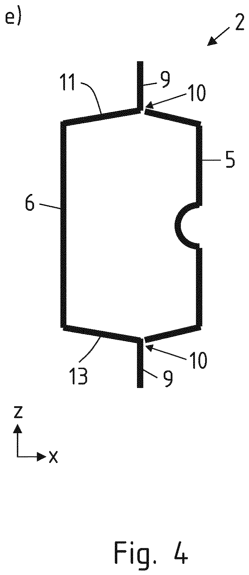

Figur 4e zeigt eine weitere Ausgestaltungsvariante. Hierbei weist die Hinterwand 6 den Querschnitt eines Hutprofils mit abstehenden Flanschen auf. Die Vorderwand 5 ist als W-förmiges bzw. omegaförmiges Blech gekoppelt. Diese weist jedoch keine Flansche auf. Die Koppelungsstellen 10 sind somit nicht in den Flanschen 9 selber, sondern am Übergang zwischen Obergurt 11 und Untergurt 13 zu Flansch 9 der Hinterwand 6 gekoppelt. Hier können beispielsweise lasergeschweißte Steppnähte bzw. MIG/MAG-Schweißverfahren eingesetzt werden.

Das erfindungsgemäße Crashszenario ist in Draufsicht in Figur 5 dargestellt. Ein Pfahl 16 dringt in Kraftfahrzeuglängsrichtung X in das nicht näher dargestellte Kraftfahrzeug ein. Dadurch verformt sich der Querträger 2 und schmiegt sich in seinem Längsschnitt an die Kontur des Pfahls 16 an. Insbesondere in dem mittleren Längenabschnitt. Die Vorderwand 5 und die Hinterwand 6 werden dabei zumindest im Längenabschnitt aufeinander zu bewegt und dienen als Zugband, so dass weder ein Abreißen von Vorderwand 5 noch Hinterwand 6 erfolgt. Um den Effekt zu verstärken können innenseitige Sicken 7 an den Crashboxen 3 angeordnet sein, so dass die Sicken 7 sich nach innen auf die Kraftfahrzeugquerrichtung Y verformen und somit eine weitere Zugbandcharakteristik von sich aufeinander zu bewegenden Vorderwand 5 und Hinterwand 6 zueinander begünstigen.

Figuren 6a und 6b zeigen das erfindungsgemäße Crashszenario bei initialem Aufprall sowie fortschreitendem Aufprall. Der Pfahl 16 prallt zunächst an die Vorderwand 5 des Querträgers 2. Hierdurch wird diese initial verformt. Bei fortschreitendem Eintreten erfolgt in Kraftfahrzeugvertikalrichtung Z auf die Bildebene nach oben und unten ein Strecken bzw. Flachdrücken des Querträgers 2 aufgrund des Pfahls 16, so dass Vorderwand 5 aber auch Hinterwand 6 in Kraftfahrzeugvertikalrichtung Z gezogen bzw. gestreckt werden. Die Vorderwand 5 ist in ihrer Abwicklungslänge geringfügig kleiner als die Hinterwand 6. Bei zunehmender Verformung in Kraftfahrzeugvertikalrichtung Z wie in Figur 6b dargestellt sowie fortschreitender Verformung wie in Figur 5 dargestellt, wird somit ein kontrolliertes Zugbandverhalten dargestellt, ohne dass Vorderwand 5 bzw. Hinterwand 6 sich unkontrolliert voneinander derart verformen, dass eine der beiden Wände reißt, durch die erfindungsgemäße definierte Abwicklungslänge und ein daraus resultierend geringem "Hebel" bzw. Abstand zwischen vorderer Aufprallfläche und der stärksten auf Zugspannung beanspruchten Hinterwand. Im Mittelabschnitt kann ein Versagen der Hinterwand zuverlässig und ohne aufwendige Maßnahmen wie lokal duktileren Materialeigenschaften oder Verstärkungspatches verhindert werden. Im weiteren Crash- bzw. Intrusionsverlauf können die Vorderwand und Hinterwand noch weiter zusammengeschoben und unmittelbar flächig aufeinander zum Liegen kommen, so dass sich ein Zugverbund als Doppelblechlage ausbildet.

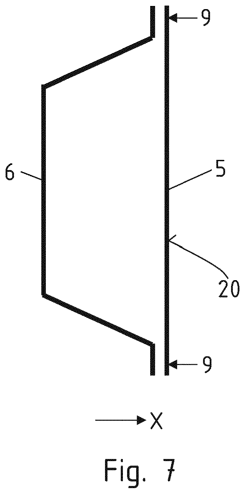

Figur 7 zeigt eine Querschnittsansicht in Kraftfahrzeuglängsrichtung X gemäß der Schnittlinie VII-VII aus Figur 5. Hierbei wird davon ausgegangen, dass die erfindungsgemäße Relation zwischen Abwicklungslänge Vorderwand 5 und Abwicklungslänge Hinterwand 6 in Verbindung mit der jeweiligen Profilierung von Vorderwand 5 und Hinterwand 6 zueinander nur im mittleren Längenabschnitt ausgebildet ist. In den äußeren Längenabschnitten ist die Vorderwand 5 als bevorzugt ebenes Schließblech ausgebildet sowie die Hinterwand 6 als hutförmiges Profil. Die in Kraftfahrzeuglängsrichtung X nach vorn orientierte Aufprallfläche für Gegenstände bzw. ein Aufprallszenario mit teilweiser Überdeckung ist somit vergrößert, dadurch bedingt, dass auch der äußere Bereich der Flansche 9 als vordere Aufprallfläche mitdienen. Somit kann die erfindungsgemäße Stoßfängeranordnung 1 auch weitere Crashszenarien, beispielsweise ein Crashszenario mit teilweiser Überdeckung und/oder ein Barriertest hinsichtlich der Crashbedingungen erfüllen.

### Bezugszeichen:

1 - Stoßfängeranordnung
2 - Querträger
3 - Crashbox
4 - mittlerer Längenabschnitt
5 - Vorderwand
6 - Hinterwand
7 - Sicke
8 - Innenraum
9 - Flansch
10 - Kopplungsstelle
11 - Obergurt zu 6
12 - Obergurt zu 5
13 - Untergurt zu 6
14 - Untergurt zu 5
15 - Mittensteg
16 - Pfahl
17 - äußerer Längenabschnitt
18 - Anbindungsabschnitt
19 - Rundung
20 - Aufprallfläche

α - Winkel
L - Länge
X - Kraftfahrzeuglängsrichtung
Y - Kraftfahrzeugquerrichtung
Z - Kraftfahrzeugvertikalrichtung
Δ - Delta

## Patentansprüche

1. Stoßfängeranordnung (1), welche über Crashboxen (3) an einem Kraftfahrzeug gekoppelt ist, aufweisend zumindest einen Querträger (2), der Anbindungsabschnitt (18) für die Crashboxen (3) und einen dazwischen liegenden mittleren Längenabschnitt (4) umfasst, wobei der Querträger (2)im Querschnitt eine profilierte Vorderwand (5) und eine profilierte Hinterwand (6) aufweist, **dadurch gekennzeichnet, dass** in dem mittleren Längenabschnitt (4) eine Abwicklungslänge der Vorderwand (5) weniger als 20 %, insbesondere weniger als 15 % und bevorzugt weniger als 10 % kleiner ist, in Relation zu einer Abwicklungslänge der Hinterwand (6).

2. Stoßfängeranordnung (1) nach Anspruch 1, **dadurch gekennzeichnet, dass** die Profilierung der Vorderwand (5) und der Hinterwand (6) im mittleren Längenabschnitt (4) im Querschnitt C-förmig bzw. hutförmig ausgebildet ist, wobei die Öffnungen der C- bzw. Hut-Form aufeinander zu zeigend angeordnet sind.

3. Stoßfängeranordnung (1) nach Anspruch 1 oder 2, **dadurch gekennzeichnet, dass** der Querträger (2) aus zwei profilierten miteinander gefügten Halbschalen hergestellt ist oder dass der Querträger (2) einstückig und werkstoffeinheitlich hergestellt ist.

4. Stoßfängeranordnung (1) nach einem der Ansprüche 1 bis 3, **dadurch gekennzeichnet, dass** der Querträger (2) aus einem Stahlwerkstoff, insbesondere ist wenigstens eine Halbschale durch Warmumformen und Presshärten hergestellt ist oder dass der Querträger (2) aus einem Leichtmetallwerkstoff hergestellt ist.

5. Stoßfängeranordnung (1) nach einem der Ansprüche 1 bis 4, **dadurch gekennzeichnet, dass** die Abwicklungslänge von einer, bezogen auf die Kraftfahrzeugvertikalrichtung (Z), oberen Koppelungsstelle zwischen Vorderwand (5) und Hinterwand (6) zu einer unteren Koppelungsstelle gemessen ist.

6. Stoßfängeranordnung (1) nach einem der Ansprüche 1 bis 5, **dadurch gekennzeichnet, dass** die Vorderwand (5) und die Hinterwand (6) als zumindest längenabschnittsweises im Querschnitt hutförmiges Profil ausgebildet sind, wobei besonders bevorzugt Vorderwand (5) und Hinterwand (6) über in Kraftfahrzeugvertikalrichtung (Z) orientiere Flansche (9) miteinander gekoppelt sind.

7. Stoßfängeranordnung (1) nach einem der Ansprüche 1 bis 6, **dadurch gekennzeichnet, dass** die definierte Abwicklungslänge nur in dem mittleren Längenabschnitt (4), bezogen auf die Kraftfahrzeugquerrichtung (Y), ausgebildet ist, insbesondere in einem Bereich von einer Mittenquerschnittsebene kleiner gleich ± 250 mm, insbesondere kleiner gleich ± 210 mm, mindestens jedoch ± 80 mm.

8. Stoßfängeranordnung (1) nach einem der Ansprüche 1 bis 7, **dadurch gekennzeichnet, dass** in der Vorderwand (5) eine Sicke (7) ausgebildet ist, welche sich in Ihrer Längsrichtung in Kraftfahrzeugquerrichtung (Y) zumindest im mittleren Längenabschnitt (4) erstreckt.

9. Stoßfängeranordnung (1) nach einem der Ansprüche 1 bis 8, **dadurch gekennzeichnet, dass** der Querträger (2) im mittleren Längenabschnitt (4) im Querschnitt sechseckförmig ausgebildet ist und/oder dass zwei Wandabschnitte der Profilierung in einem Winkel (α) größer 95° zueinander angeordnet sind.

10. Stoßfängeranordnung (1) nach einem der Ansprüche 1 bis 9, **dadurch gekennzeichnet, dass** ein Öffnungswinkel (α) zwischen Obergurt (11, 12) und Untergurt (13, 14) der Vorderwand (5) und/oder Hinterwand (6) größer 95° ausgebildet ist.

11. Stoßfängeranordnung (1) nach einem der Ansprüche 5 oder 7, **dadurch gekennzeichnet, dass** im Anbindungsabschnitt (8) die Vorderwand (5) von einer oberen Koppelstelle (10) zu einer unteren Koppelstelle (10) im Querschnitt gesehen geradlinig ausgebildet ist und eine plane Aufprallfläche (20) bereitstellt.

12. Stoßfängeranordnung (1) nach einem der Ansprüche 1 bis 11, **dadurch gekennzeichnet, dass** mindestens jedoch beide Abwicklungslängen gleich groß sind, bevorzugt ist die Abwicklungslänge (L5) der Vorderwand (5) um mindestens mehr als 1% kleiner als die Abwicklungslänge (L6) der Hinterwand (6).

## Claims

1. Bumper arrangement (1) which is coupled to a motor vehicle via crash boxes (3), having at least one cross beam (2) which comprises a connection section (18) for the crash boxes (3) and an intermediate longitudinal section (4), wherein the cross beam (2) has, in cross-section, a profiled front wall (5) and a profiled rear wall (6), **characterized in that**, in the intermediate longitudinal section (4), a processing length of the front wall (5) is less than 20 %, in particular less than 15 % and preferably less than 10 % smaller, in relation to a processing length of the rear wall (6).

2. Bumper arrangement (1) according to claim 1, **characterized in that**, in cross-section, the profiling of the front wall (5) and the rear wall (6) in the intermediate longitudinal section (4) is configured C-shaped or hat-shaped, respectively, wherein the openings of the C-shape or hat-shape, respectively, are arranged facing each other.

3. Bumper arrangement (1) according to claim 1 or 2, **characterized in that** the cross beam (2) is made from two profiled half-shells joined together or that the cross beam (2) is made in one piece and from the same material.

4. Bumper arrangement (1) according to any one of claims 1 to 3, **characterized in that** the cross beam (2) is made from a steel material, in particular at least one half-shell is made by hot forming and press hardening or that the cross beam (2) is made from a light metal material.

5. Bumper arrangement (1) according to any one of claims 1 to 4, **characterized in that** the processing length is measured from an upper coupling point between the front wall (5) and the rear wall (6) in relation to the vertical direction (Z) of the motor vehicle to a lower coupling point.

6. Bumper arrangement (1) according to any one of claims 1 to 5, **characterized in that** the front wall (5) and the rear wall (6) are configured as a hat-shaped profile in cross-section at least in longitudinal sections, with the front wall (5) and rear wall (6) particularly preferably being coupled to one another via flanges (9), oriented in the vertical direction (Z) of the motor vehicle.

7. Bumper arrangement (1) according to any one of claims 1 to 6, **characterized in that** the defined processing length is only configured in the intermediate longitudinal section (4), based on the transverse direction (Y) of the motor vehicle, in particular in a region of a central cross-sectional plane less than or equal to ± 250 mm, in particular less than or equal to ± 210 mm, but at least ± 80 mm.

8. Bumper arrangement (1) according to any one of claims 1 to 7, **characterized in that** a bead (7) is configured in the front wall (5), which extends in its longitudinal direction in the transverse direction (Y) of the motor vehicle at least in the intermediate longitudinal section (4).

9. Bumper arrangement (1) according to any one of claims 1 to 8, **characterized in that** the cross beam (2) in the intermediate longitudinal section (4) is configured hexagonally in cross-section and/or that two wall sections of the profiling are arranged at an angle (α) greater than 95° to one another.

10. Bumper arrangement (1) according to any one of claims 1 to 9, **characterized in that** an opening angle (α) between the upper flange (11, 12) and lower flange (13, 14) of the front wall (5) and/or rear wall (6) is configured greater than 95°.

11. Bumper arrangement (1) according to any one of claims 5 or 7, **characterized in that** in the connection section (8) the front wall (5) is configured to be straight in cross-section from an upper coupling point (10) to a lower coupling point (10) and provides a flat impact surface (20).

12. Bumper arrangement (1) according to any one of claims 1 to 11, **characterized in that** but at least both processing lengths are the same size, preferably the processing length (L5) of the front wall (5) is at least more than 1% smaller than the processing length (L6) of the rear wall (6).

## Revendications

1. Agencement de pare-chocs (1) qui est couplé par le biais de boîtiers amortisseurs de chocs (3) à un véhicule automobile, présentant au moins une traverse (2) qui comprend une section de liaison (18) pour les boîtiers amortisseurs de chocs (3) et une section longitudinale (4) médiane se trouvant au milieu, dans lequel la traverse (2) présente en section transversale une paroi avant (5) profilée et une paroi arrière (6) profilée, **caractérisé en ce que** dans la section longitudinale (4) médiane, une longueur développée de la paroi avant (5) est inférieure de moins de 20 %, en particulier de moins de 15 % et de préférence de moins de 10 %, par rapport à une longueur développée de la paroi arrière (6).

2. Agencement de pare-chocs (1) selon la revendication 1, **caractérisé en ce que** le profilage de la paroi avant (5) et de la paroi arrière (6) est réalisé dans la section longitudinale (4) médiane en section transversale en forme de C ou en forme de chapeau, dans lequel les ouvertures de la forme en C ou en chapeau sont disposées tournées l'une vers l'autre.

3. Agencement de pare-chocs (1) selon la revendication 1 ou la revendication 2, **caractérisé en ce que** la traverse (2) est fabriquée à partir de deux demi-coques profilées assemblées l'une à l'autre ou **en ce que** la traverse (2) est fabriquée en un seul bloc et en un seul matériau.

4. Agencement de pare-chocs (1) selon l'une quelconque des revendications 1 à 3, **caractérisé en ce que** la traverse (2) est fabriquée en un matériau d'acier, en particulier au moins une demi-coque par formage à chaud et trempe sous presse ou **en ce que** la traverse (2) est fabriquée en un matériau de métal léger.

5. Agencement de pare-chocs (1) selon l'une quelconque des revendications 1 à 4, **caractérisé en ce que** la longueur développée est mesurée d'un point de couplage supérieur, par rapport au sens vertical du véhicule automobile (Z) entre la paroi avant (5) et la paroi arrière (6) à un point de couplage inférieur.

6. Agencement de pare-chocs (1) selon l'une quelconque des revendications 1 à 5, **caractérisé en ce que** la paroi avant (5) et la paroi arrière (6) sont réalisées comme un profilé en section transversale en forme de chapeau par section longitudinale, dans lequel de manière particulièrement préférée, la paroi avant (5) et la paroi arrière (6) sont couplées l'une à l'autre par le biais de brides (9) orientées dans le sens vertical du véhicule automobile (Z).

7. Agencement de pare-chocs (1) selon l'une quelconque des revendications 1 à 6, **caractérisé en ce que** la longueur développée définie est réalisée seulement dans la section longitudinale (4) médiane, par rapport au sens transversal du véhicule automobile (Y), en particulier dans une zone d'un plan de section transversale médiane inférieur ou égal à ± 250 mm, en particulier inférieur ou égal à ± 210 mm, toutefois au moins de ± 80 mm.

8. Agencement de pare-chocs (1) selon l'une quelconque des revendications 1 à 7, **caractérisé en ce qu'**une moulure (7) est réalisée dans la paroi avant (5), laquelle s'étend dans son sens longitudinal dans le sens transversal du véhicule automobile (Y) au moins dans la section longitudinale (4) médiane.

9. Agencement de pare-chocs (1) selon l'une quelconque des revendications 1 à 8, **caractérisé en ce que** la traverse (2) est réalisée dans la section longitudinale (4) médiane en section transversale de manière hexagonale et/ou **en ce que** deux sections de paroi du profilage sont agencées selon un angle (α) supérieur à 95° l'une par rapport à l'autre.

10. Agencement de pare-chocs (1) selon l'une quelconque des revendications 1 à 9, **caractérisé en ce qu'**un angle d'ouverture (α) entre la membrure supérieure (11, 12) et la membrure inférieure (13, 14) de la paroi avant (5) et/ou la paroi arrière (6) est réalisé supérieur à 95 .

11. Agencement de pare-chocs (1) selon l'une quelconque des revendications 5 ou 7, **caractérisé en ce que** dans la section de liaison (8), la paroi avant (5) est réalisée de manière rectiligne vu en section transversale d'un point de couplage (10) supérieur à un point de couplage (10) inférieur et fournit une surface de collision (20) plane.

12. Agencement de pare-chocs (1) selon l'une quelconque des revendications 1 à 11, **caractérisé en ce qu'**au moins toutefois les deux longueurs de déroulement sont de même dimension, de préférence la longueur développée (L5) de la paroi avant (5) est inférieure au moins de plus de 1 % à la longueur développée (L6) de la paroi arrière (6).
